# EUROPÄISCHE PATENTSCHRIFT

(11) **EP 0 437 171 B1**
(45) Veröffentlichungstag und Bekanntmachung des Hinweises auf die Patenterteilung: **09.08.1995**
(21) Anmeldenummer: 90810024.1
(22) Anmeldetag: 10.01.1990
(51) Int. Cl.: E02D 17/20

(54) **Verfarhen zum Erstellen einer begrünbaren Verkleidung mit einer solchen Anordnung sowie Verwendung einer solchen Anordnung**
Method for forming a vegetation supporting layer with such a system and use of such a system
Méthode pour la réalisation d'un revêtement végétal sur un tel système et utilisation d'un tel système

(43) Veröffentlichungstag der Anmeldung: 17.07.1991
(73) Patentinhaber: Eberle Landschaftsbau AG, CH-9100 Herisau (CH)
(72) Erfinder: Eberle, Anton, CH-9100 Herisau (CH)
(74) Vertreter: Groner, Manfred

(56) Entgegenhaltungen:
- WO-A-88/09404
- JP-A-56 146 517
- US-A- 3 570 254
- PATENT ABSTRACTS OF JAPAN vol. 8, no. 148 (M-308)(1585) 11 Juli 1984, & JP-A-59 044424 (SAIKOU) 12 März 1984,
- PATENT ABSTRACTS OF JAPAN vol. 5, no. 76 (M-69)(748) 20 Mai 1981, & JP-A-54 101466 (TAKEMI MOMO) 11 März 1981,
- PATENT ABSTRACTS OF JAPAN vol. 8, no. 54 (M-282)(1491) 10 März 1984, & JP-A-58 207419 (MITSUI TOATSU) 02 Dezember 1983,
- PATENT ABSTRACTS OF JAPAN vol. 8, no. 216 (M-329)(1653) 03 Oktober 1984, & JP-A-59 102018 (SANYOU KOKUSAKU) 12 Juni 1984,

## Beschreibung

Die Erfindung betrifft eine Anordnung nach dem Oberbegriff des unabhängigen Patentanspruchs 1.

Durch die JP-A-56-146517 (Patent Abstract of Japan, Band 6, Nr. 29 (M-113) [907]) ist eine Anordnung dieser Art bekannt geworden. Gemäss dieser Schrift wird ein rostfreies Gitter über die gesamte Böschungsfläche gelegt und darauf mittels Netzhaltern und Ankerbolzen befestigt. Im Abstand zum Gitter ist mittels Ankerbolzen ein weiteres, oberes Gitter an der Böschung befestigt. Da solche Böschungen sehr hoch sind, ist ein seitliches Einspritzen von Spritzgut nicht möglich, weshalb dieses hier durch das obere Gitter hindurch gespritzt wird.

Der Erfindung liegt die Aufgabe zugrunde, eine Anordnung der genannten Gattung zu schaffen, mit der auch an Steilböschungen und Felspartien eine Vegetationsschicht beispielsweise in einer Stärke von bis etwa 25 cm hydropneumatisch aufgebracht und die auch in klimatisch schwierigen Gegenden, beispielsweise in Berggebieten vollflächig begrünt werden kann. Die Aufgabe wird durch die Erfindung gemäss Anspruch 1 gelöst.

Die erfindungsgemässe Anordnung erlaubt ohne grossen Bauaufwand auch an Hängen mit einer Neigung bis 75° eine vollflächige und den örtlichen Gegebenheiten angepasste Begrünung. Ebenfalls ist eine Verkleidung von Kunstbauten auf allen Arten von Beton möglich. Die Vegetationsschicht kann genau in der gewünschten Stärke hydropneumatisch aufgebracht werden. Hierbei wird Spritzgut in erdfeuchtem Zustand mit geeigneten Geräten mittels Verschlauchung pneumatisch transportiert und unmittelbar beim Austritt aus der Spritzdüse mit Wasser durchsetzt. Dadurch kann der Wassergehalt der Vegetationsschicht den örtlichen Verhältnissen angepasst werden. Wesentlich ist hierbei, dass das Spritzgut in alle Klüfte und Ritzen des Untergrundes eindringt. Mit der erfindungsgemässen Anordnung wird gleichzeitig eine Stabilisierung der obersten Bodenschicht erreicht.

Gemäss einer Weiterbildung der Erfindung weist die Decke des Trägergewebes eine Krallschicht zur Fixierung einer organischen Keimschicht auf. Durch den Kralleffekt dieser Schicht entsteht nach dem Abtrocknen des Spritzgutes eine stabile Deckschicht mit hoher Kohäsion. Die organische Keimschicht mit einer geeigneten Samenmischung wird in mehreren Arbeitsgängen hydraulisch in die Krallschicht eingebracht. Ein besonders guter Erosionsschutz wird erreicht, wenn die Decke gemäss einer Weiterbildung ein Filtergewebe aufweist. Ein in die Decke eingebautes Armierungsgewebe ergibt eine Schalungswirkung für die hydropneumatische Hinterfüllung der organischen Vegetationsschicht. Gemäss einer Weiterbildung der Erfindung ist das Armierungsgewebe zwischen der Krallschicht und dem Filtergewebe angeordnet. Ein solches Trägergewebe ist rollbar und somit günstig zu handhaben.

Die Erfindung betrifft ebenfalls ein geeignetes Verfahren zum Herstellen einer begrünbaren Verkleidung mit einer Anordnung gemäss Anspruch 1 sowie eine Verwendung der Anordnung. Zweckmässige Weiterbildungen ergeben sich aus den übrigen Ansprüchen.

Ausführungsbeispiele der Erfindung werden nachfolgend anhand der Zeichnungen näher erläutert. Es zeigen:
- Fig. 1: eine perspektivische Ansicht einer teilweise geschnittenen Verkleidung nach einer ersten Variante,
- Fig. 2: ein Schnitt entlang der Linie I-I der Fig. 1,
- Fig. 3: eine perspektivische Ansicht einer teilweise geschnittenen Verkleidung gemäss einer weiteren Variante,
- Fig. 4: ein Schnitt entlang der Linie II-II der Fig. 3,
- Fig. 5: eine perspektivische Ansicht einer teilweise geschnittenen Verkleidung gemäss einer dritten Variante,
- Fig. 6: ein Schnitt entlang der Linie VI-VI der Fig. 5,
- Fig. 7: eine perspektivische Ansicht einer erfindungsgemässen Anordnung gemäss einer vierten Variante,
- Fig. 8: ein Schnitt entlang der Linie VIII-VIII in Fig. 7,
- Fig. 8a: eine schematische Darstellung zur Erläuterung der hydorpneumatischen Hinterfüllung, und
- Fig. 9a bis 9f: schematische Darstellungen zur Erläuterung der einzelnen Verfahrensschritte zum Erstellen einer erfindungsgemässen Verkleidung, und
- Fig. 10: eine schematische Darstellung einer Verwendung der erfindungsgemässen Anordnung.

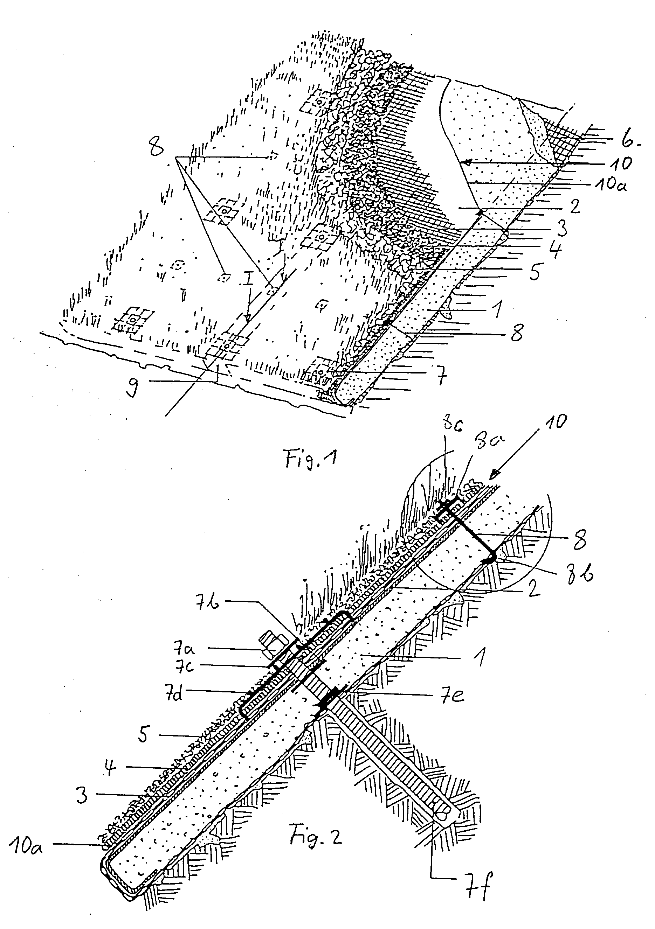

Die in den Figuren 1 und 2 dargestellte Ausführung eignet sich besonders als Verkleidung und Begrünung von verwitterungsgefährdeten Felsböschungen und Steilböschungen in Lockergestein. Die Stärke der Vegetationsschicht 1 beträgt in diesem Fall beispielsweise 5-7 cm.

Wie insbesondere die Fig. 2 deutlich zeigt, ist die Vegetationsschicht 1 durch ein mehrschichtiges Trägergewebe 10 erosionssicher gehalten. Das Trägergewebe 10 besteht aus mehreren Bahnen die in Bereichen 9 sich überlappen.

Das mehrschichtige Trägergewebe 10 umfasst im Bereich einer Decke 10a als unterste Schicht ein Filter 2, das durchwuchsfähig ist aber die festen Bestandteile der Vegetationsschicht 1 zurückhält. Das Filtergewebe 2 erstreckt sich über den gesamten Bereich der Decke 10a und ist hangunterseitig eingeschlagen. Das Filtergewebe 2 schützt die Verkleidung insbesondere vor Erosion. Nach einer hier nicht gezeigten vorteilhaften Ausführung ist das Filtergewebe im Armierungsgewebe eingearbeitet.

Ueber dem Filtergewebe 2 ist ein Armierungsgewebe 3 angeordnet, das sich über den Bereich der Decke 10a erstreckt und als Schalung für die hydropneumatisch hinterfüllte Vegetationsschicht 1 dient. Das Armierungsgewebe 3 ist hangunterseitig umgelegt und geht in ein Grundgewebe 6 über.

Ueber dem Armierungsgewebe 3 ist schliesslich eine Krallschicht 4 aus verrotbarem Material angeordnet, in das eine organische Keimschicht 5 inkl. einer Samenmischung in mehreren Arbeitsgängen hydraulisch eingebracht wird. Die Schichtdicke dieser Keimschicht beträgt beispielsweise etwa 2 cm.

Das Trägergewebe 10 wird mittels Verankerungen 7, die in den Untergrund eingesetzt sind, fixiert. Die Verankerungen weisen je einen mit einem Gewinde versehenen Ankerstab 7f auf, der als Fels oder Erdanker ausgebildet ist. Am Ankerstab 7f sind eine Distanzplatte 7b mit Gewinde sowie eine Druckplatte 7e mit einer Mutter angeordnet. Mit der Druckplatte 7e wird das Grundgewebe befestigt und verspannt. Die Distanzplatte 7b wird entsprechend der gewünschten Stärke der Vegetationsschicht 1 eingestellt und liegt an der Unterseite des Trägergewebes 10 an. Mit einer Mutter 7a und einer Unterlagsplatte 7c wird ein Druckverteilgitter 7d unter Gegendruck der Distanzplatte 7b an das Trägergewebe 10 aussenseitig angelegt und dadurch vergleichsweise grossflächig fixiert. Ausser den hauptsächlichen Verankerungen 7 sind Zwischenverankerungen 8 vorgesehen, die jeweils einen Stab 8b aufweisen, an dem eine Druckverteilplatte 8e und eine Lochscheibe 8c mit Gewinde angeordnet sind. Der Stab 8b ist am unteren Ende gebogen und im Grundgewebe 8 eingehängt. Die Druckverteilplatte greift von aussen in das Trägergewebe und insbesondere in das Armierungsgewebe 3 ein und fixiert dieses.

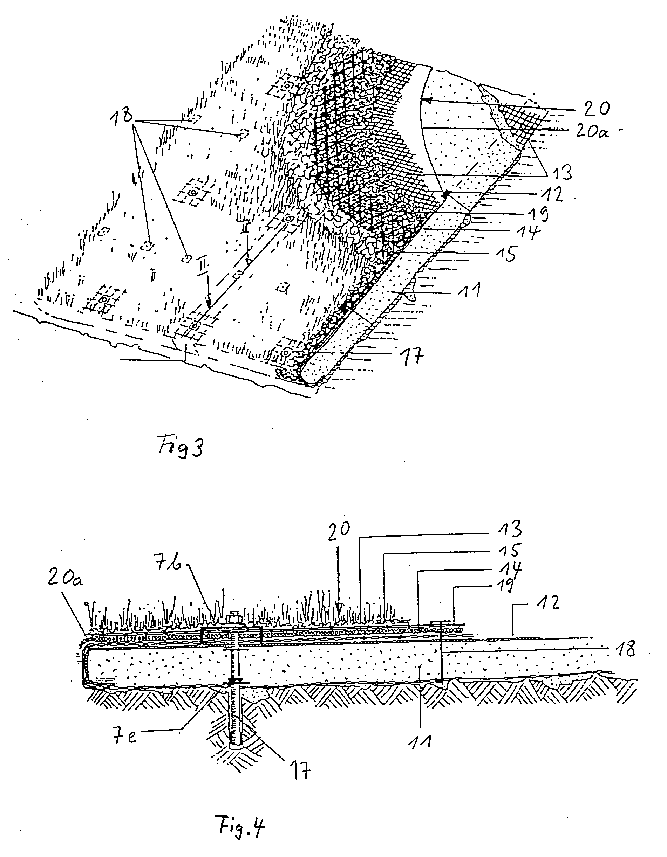

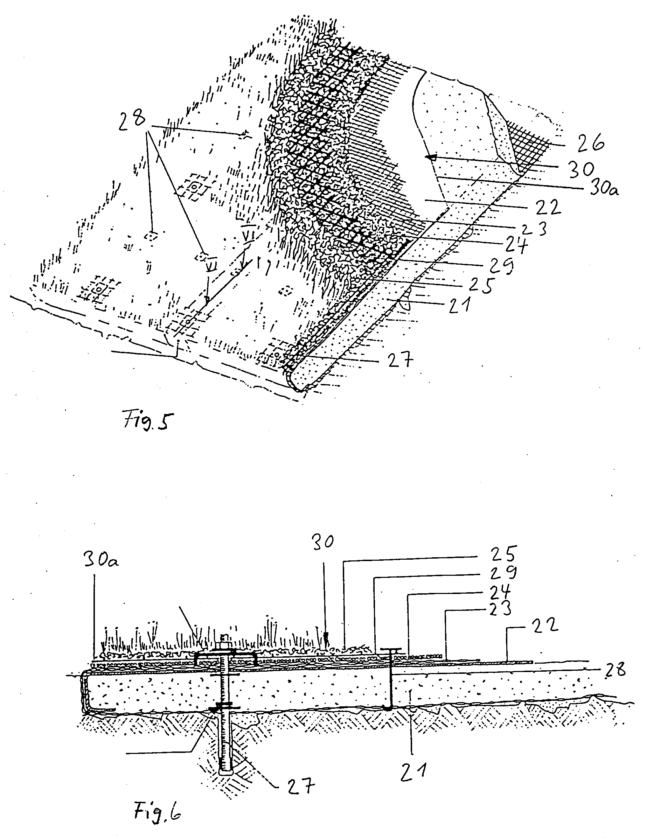

Die Figuren 3 und 4 zeigen eine Ausführung der erfindungsgemässen Anordnung, die für einen Vegetationsschichtaufbau von etwa 7-15 cm Stärke geeignet ist. Sie eignet sich ebenfalls zur Verkleidung und Begrünung von verwitterungsgefährdeten Felsböschungen und Steilböschungen im Lockergestein sowie für den Vegetationsschichtaufbau auf Betonkonstruktionen.

Ein mehrschichtiges Trägergewebe 20 weist im Bereich einer Decke 20a als unterste Schicht ein Filtergewebe 12 und über dieser ein vergleichsweise grobmaschiges Armierungsgewebe 13 sowie als dritte Schicht eine Krallschicht 14 auf. Ueber der Krallschicht 14 befindet sich ein Armierungsnetz 19 aus Metall, das so ausgebildet ist, dass es dem Erddruck bei einer hydropneumatischen Hinterfüllung bis zu einer Schichtstärke der Vegetationsschicht von 15 cm aufnehmen kann. Das Trägergewebe 20 sowie das Armierungsnetz 19 sind durch Verankerungen 17 und Zwischenverankerungen 19 wie beschrieben am Untergrund fixiert.

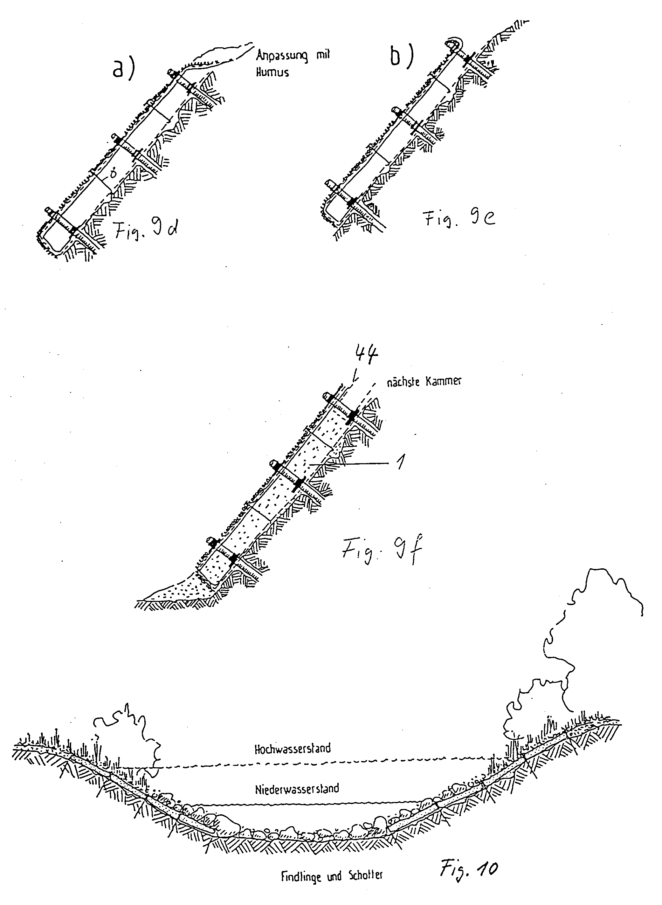

Die in den Figuren 5 und 10 gezeigte weitere Variante der erfindungsgemässen Anordnung ist für eine Vegetationsschicht 21 in einer Stärke von 15-25 cm vorgesehen. Sie eignet sich insbesondere zur Verkleidung und Begrünung von verwitterungsgefährdeten Felsböschungen und Steilböschungen im Lockergestein mit gleichzeitiger Stabilisierung der obersten Bodenschicht. Sie eignet sich ebenfalls für die Sanierung von Oberflächenrutschungen. Bei dieser Ausführung ist auf eine Krallschicht 24 ein Statiknetz 29 aus Metall gelegt, das im Bereich einer Decke 30a eine hinreichende Schalungswirkung für die Vegetationsschicht 21 gewährleistet. Das Statiknetz 29 ist über Verankerungen 27 und Zwischenverankerungen mit den übrigen Schichten des Trägergewebes 30 und mit einem Grundgewebe sowie mit dem Untergrund verbunden. Mit dieser Ausführung wird auch bei einer vergleichsweise starken Vegetationsschicht an steilen und rutschgefährdeten Steilhängen eine ebene und vollflächig begrünbare Verkleidung möglich. Wie hier weiter nicht dargestellt ist zur Sanierung von Rutschungen in der obersten Bodenschicht zusätzlich direkt auf die Bodenoberfläche ein weiteres Statiknetz verspannt. Denkbar ist auch eine Ausführung, bei welcher lediglich ein Statiknetz auf der Bodenoberfläche, also unterhalb der Vegetationsschicht 21, verspannt ist.

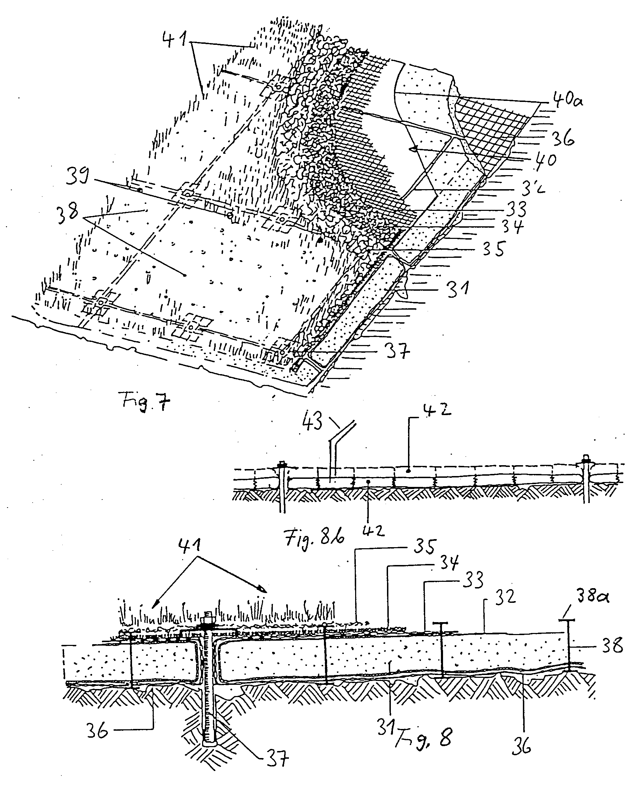

Für den Einsatz an besonders erosionsgefährdeten Stellen und insbesondere für Uferverbauungen ist die Ausführungsvariante nach den Figuren 7 und 8 geeignet. Bei dieser Ausführung werden mehrere rechteckige Blöcke 41 an ihren Schmalseiten aneinandergelegt. Jeder Block 41 ist allseitig von einem Mantel aus einem Filtergewebe 32 und einem Armierungsgewebe umgeben. Die Stärke der Blöcke 41 wird durch Distanzhalter 38 begrenzt, die an ihren Enden Platten 38 aufweisen, die aussen an den Breitseiten der Blöcke anliegen. Jeweils über mehrere Blöcke 41 ist eine Krallschicht 34 und in dieser fixiert eine Keilschicht 35 gelegt. Verankerungen 37 sind zwischen angrenzenden Blöcken 41 im Untergrund verankert und fixieren jeweils angrenzende Blöcke 41 sowie die Krallschicht 34. Jeder Block 41 besitzt im Bereich der Decke 40a mehrere Einfüllstutzen 39, durch welche zur Bildung der Vegetationsschicht 31 Spritzgut hydropneumatisch eingebracht wird. Solche Einfüllstutzen sind auch bei den übrigen Ausführungsvarianten jeweils in der Decke der Trägergewebe 10, 20, 30 und 40 vorgesehen.

In der Fig. 8a ist schematisch dargestellt, wie die matratzenförmigen Blöcke durch hydropneumatische Hinterfüllung hergestellt werden. Mit 42 ist die Hülle aus dem Filtergewebe 32 und dem Armierungsgewebe 33 im Leerzustand, also vergleichsweise flach dargestellt. Mit einem oder mehreren Spritzrohren 43, die an den Einfüllstutzen 39 angeschlossen sind, wird das Spritzgut in das Innere der Hüllen 42 hydropneumatisch eingebracht. Die Decke der Hülle 42 steigt hierbei allmächlich an, bis ein weiterer Anstieg durch die Distanzhalter 38 begrenzt wird. Da mehrere gleichmässig verteilte Distanzhalter 38 angebracht sind, wird eine sehr gleichmässige Stärke über den ganzen Bereich des Blockes 41 erreicht.

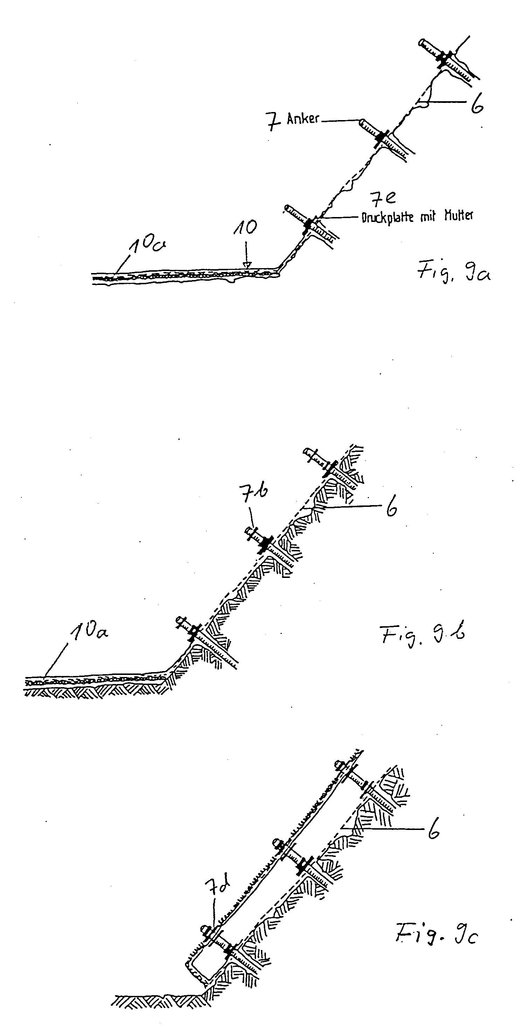

Anhand der Figuren 9a bis 9f wird das Vorgehen beim Aufbau einer Verkleidung mit einer Anordnung gemäss den Figuren 1 und 2 erläutert.

In einem ersten Schritt wird die zu sanierende Steilböschung gereinigt, die störenden Unebenheiten entfernt und ein Planum erstellt. Hierauf werden die Anker gesetzt und wie in Fig. 9a gezeigt das Trägergewebe 10 ausgelegt und das Grundgewebe 6 mit dem Druckplatten 7e an mehreren Punkten fixiert. Nun werden gemäss Figur 9b die Distanzplatten 7b montiert und entsprechend der gewünschten Schichtstärke sowie zur Ausegalisierung von Unebenheiten eingestellt. Nun wird der die Decke 10a bildende Teil des Trägergewebes umgeschlagen und mit den Druckverteilgittern an den oberen Enden der Ankerstäbe fixiert. Gleichzeitig werden die Zwischenverankerungen 8 angebracht. Nun wird das Trägergewebe 10 am oberen Rand gemäss Figur 9d in den anstehenden Boden befestigt oder bei höheren Böschungen gemäss Figur 9e über den obersten Anker zurückgeschlagen.

Nun wird die Vegetationsschicht hydropneumatisch in die Kammern eingebracht und hierbei alle Ritzen des Untergrundes verfüllt. Bei höheren Böschungen wird nun nach dem gleichen Verfahren am oberen Ende eine nächste Kammer 44 erstellt.

Abschliessend wird nun die Krallschicht mit einer organischen, eine Samenmischung enthaltenden Keimschicht hydraulisch verfüllt und in der Regel die Steilböschung mit standortgerechten Pflanzen bepflanzt.

Vorteilhaft ist, wenn das Spritzgut unmittelbar beim Austritt aus der Spritzdüse mit Wasser durchsetzt wird. Damit ist es möglich, den Wassergehalt der Vegetationsschicht den örtlichen Verhältnissen anzupassen.

Ein besonders geeignetes Spritzgut weist die folgenden Bestandteile auf:
a) organische Substanz auf Basis einer Komposterde mit hohem Skelettanteil,
b) organische Pflanzenfasern in einer Länge von vorzugsweise 5-7 cm zur Verbindung und Armierung der Skelettanteile,
c) getrocknete Meerespflanzen, die durch die Verbindung mit Wasser eine bindige
d) gebrannte Opalinos-Blätonkugeln als Strukturgeber, sowie zur Erhöhung der Wasserspeicherkapazität,
e) Tonmineralien in verschiedenen Formen sowie
f) Mikro- und Makronährstoffe organischen Ursprungs.

Nach dem Abtrocknen dieses Spritzgutes entsteht durch die beigemischten organischen Pflanzenfasern und den Kralleffekt eine stabile Deckschicht mit hoher Kohäsion. Durch den hohen Skelettanteil wird zudem eine gute Formstabilität und eine grosse Wasserspeicherkapazität sowie hohe Ionenaustauschfähigkeit erreicht. Zu dem ist auf lange Zeit hin ein ausgeglichener Nährstoffgehalt gewährleistet.

Ein wesentlicher Vorteil der Erfindung wird darin gesehen, dass an Hängen mit unterschiedlichen Neigungen und Rutschgefährdungen verschiedene Ausführungen kombiniert werden können. So kann auf eine Verkleidung gemäss den Figuren 5 und 6 an einer Steilpartie mit unstabilem Schichtaufbau eine Verkleidung gemäss den Figuren 3 und 4 in einer angrenzenden Flachpartie mit stabilen Schichtaufbau folgen. In einer höheren angrenzenden stabilen Felspartie würde sich dann eine Verkleidung gemäss den Figuren 1 und 2 eignen. Die erfindungsgemässe Anordnung ist somit in der Anwendung ausserordentlich flexibel und erlaubt eine Anpassung auch an schwierige Verhältnisse.

Die Ausführung nach den Figuren 7 und 8 eignen sich besonders im Wasserbau zur Herstellung einer Uferverbauung, wie in Fig. 10 schematisch dargestellt.

## Patentansprüche

1. Anordnung zum Erstellen einer begrünbaren Verkleidung an einer Steilböschung oder Felspartie, mit einem flächigen Element, das mit Verankerungen (7,17,27,37) am Untergrund fixierbar und hydropneumatisch mit Spritzgut (1,11,21,31) hinterfüllbar ist, dadurch gekennzeichnet, dass das flächige Element im montierten Zustand eine matratzenförmige Kammer mit einer für das Spritzgut undurchlässigen Decke (10a,20a,30a,40a), einer Unterseite sowie Seitenwänden bildet und wenigstens eine Oeffnung (39) aufweist, durch die zur Bildung einer Vegetationsschicht das Spritzgut in die Kammer einbringbar ist und dass die Decke (10a,20a,30a,40a) ein Trägergewebe (10,20,30,40) für eine organische Keimschicht aufweist, das durchwuchsfähig ist und das zur Aufnahme und Fixierung der organischen Keimschicht mit einer Samenmischung vorgesehen ist.

2. Anordnung nach Anspruch 1, dadurch gekennzeichnet, dass die Decke (10a,20a,30a,40a) ein Filter und insbesondere ein Filtergewebe (2,12,22,32) aufweist und das Trägergewebe zur Aufnahme und Fixierung der organischen Keimschicht eine Krallschicht (4,14,24,34) aufweist.

3. Anordnung nach Anspruch 1 oder 2, dadurch gekennzeichnet, dass die Decke (10a,20a,30a) eine Armierung und insbesondere ein Armierungsgewebe (3,13,23,33) aufweist.

4. Anordnung nach Anspruch 2 oder 3, dadurch gekennzeichnet, dass das Armierungsgewebe (3,13,23,33) zwischen der Krallschicht (4,14,24,34) und dem Filtergewebe (2,12,22, 32) angeordnet ist, oder das Filtergewebe im Armierungsgewebe eingearbeitet ist.

5. Anordnung nach einem der Ansprüche 1 bis 4, dadurch gekennzeichnet, dass das Trägergewebe ein mit der Decke (10a, 20a,30a) verbundenes Grundgewebe (6,16,26,36) aufweist, das auf die Bodenoberfläche auszulegen und an der Verankerung (7, 17,27,37) zu fixieren ist.

6. Anordnung nach Anspruch 3 und 5, dadurch gekennzeichnet, dass das Grundgewebe (6,16,26,36) und das Armierungsgewebe (3,13,23,33) durch eine zusammenhängende Gewebebahn gebildet sind.

7. Anordnung nach einem der Ansprüche 1 bis 6, dadurch gekennzeichnet, dass das Armierungsgewebe (3,13,23,33) aus Metall hergestellt ist.

8. Anordnung nach einem der Ansprüche 1 bis 7, dadurch gekennzeichnet, dass die Decke (10a,20a,30a,40a) in einem äusseren Bereich ein Statiknetz (29) aufweist.

9. Anordnung nach Anspruch 8, dadurch gekennzeichnet, dass das Statiknetz (29) auf der Krallschicht (24) aufliegt.

10. Anordnung nach einen der Ansprüche 1 bis 9, gekennzeichnet durch verstellbare Distanzplatten (7b) die jeweils an einem Ankerstab (7f) der Verankerung (7) fixiert sind und an der Unterseite der Decke (10a) anliegen, wobei am Ankerstab (7f) ein ebenfalls verstellbares Element (7c,7d) angeordnet ist, dass an der Oberseite der Decke (10a) anliegt.

11. Anordnung nach Anspruch 10, dadurch gekennzeichnet, dass am Ankerstab (7f) ein Druckverteilergitter (7d) vorgesehen ist, das von aussen in die Decke (10a) eingreift und dieses fixiert.

12. Anordnung nach einen der Ansprüche 1 bis 11, gekennzeichnet durch Zwischenanker (8,18,28) die jeweils an einem Ende an der Decke (10a,20a,30a) und am anderen Ende am Grundgewebe (6,16,26) fixiert sind.

13. Anordnung nach einem der Ansprüche 2 bis 12, dadurch gekennzeichnet, dass das Filtergewebe (2,12,22,32) und das Armierungsgewebe (3,13,23,33) im gefüllten Zustand einen Block bilden, und dass die übrigen Schichten des Trägergewebes mehrere derart gebildete Blöcke (41) überdeckt.

14. Anordnung nach einem der Ansprüche 1 bis 13, gekennzeichnet durch Füllstutzen (39) in der Decke (10a, 20a,30a).

15. Anordnung nach Anspruch 13, dadurch gekennzeichnet, dass das Armierungsgewebe (33) aussen und das Filtergewebe (32) innen und den Block umfassend angeordnet sind.

16. Anordnung nach einem der Ansprüche 13 bis 15, dadurch gekennzeichnet, dass die Blöcke mehrere Distanzhalter (38) aufweisen.

17. Anordnung nach einem der Ansprüche 13 bis 16, dadurch gekennzeichnet, dass die Verankerung (37) zwischen angrenzenden Blöcken (41) angeordnet ist.

18. Anordnung nach Anspruch 1, dadurch gekennzeichnet, dass Mittel (8,18,28,38) vorgesehen sind, die entsprechend der vorgesehenen Stärke der Kammer wenigstens die Decke (10a, 20a,30a) fixieren.

19. Anordnung nach einem der Ansprüche 1 bis 18, gekennzeichnet durch Druckplatten (7e), die an je einem Ankerstab (7f) verstellbar angebracht und an die Innenseite des Grundgewebes (6) anlegbar sind.

20. Verfahren zum Erstellen einer begrünbaren Verkleidung mit einer Anordnung nach Anspruch 1 mit folgenden Verfahrensschritte:
a) Erstellen eines Planums,
b) Erstellen von Hauptverankerungspunkten und Fixieren der Verankerungen,
c) Auslegen des Trägergewebes und Fixieren eines Teilbereiches des Trägergewebes,
d) Befestigen der Decke an den Verankerungen im Abstand zur Bodenoberfläche, zur Bildung einer matratzenförmigen Kammer,
e) hydropneumatisches Einbringen des Spritzgutes in die durch das Trägergewebe gebildete matratzenförmige Kammer unter Verfüllen der Ritzen des Untergrundes,
f) hydraulisches Verfüllen der Decke mit einer eine Pflanzensamenmischung enthaltenenden Keimschicht,
g) Bepflanzen der Steilböschung.

21. Verfahren nach Anspruch 20, dadurch gekennzeichnet, dass an den Verankerungen Distanzplatten (7b) zum Festlegen der Schichtstärke und zum Ausegalisieren von Unebenheiten entsprechend eingestellt werden.

22. Verfahren nach Anspruch 20, dadurch gekennzeichnet, dass das Spritzgut mittels Verschlauchung pneumatisch transportiert und unmittelbar beim Austritt aus der Spritzdüse mit Wasser durchsetzt wird.

23. Verwendung der Anordnung nach einem den Ansprüche 1 bis 19 als Erosionsschutz im Hochwasser.

## Claims

1. Arrangement for forming a vegetation-supporting revetment on a steep slope or rock surface, comprising a planar element which can be fastened by anchorages (7, 17, 27, 37) to the subgrade and can be filled-in hydro-pneumatically with sprayed material (1, 11, 21, 31), characterized in that in the installed state the planar element forms a mattress-shaped chamber having a cover (10a, 20a, 30a, 40a) impermeable to the sprayed material, an underside and side walls and has at least one opening (39) through which the sprayed material can be introduced into the chamber to form a vegetation layer, and in that the cover (10a, 20a, 30a, 40a) has a carrier fabric (10, 20, 30, 40) for an organic germination layer, which fabric is penetrable to vegetation growth and is provided to receive and fix the organic germination layer containing a seed mixture.

2. Arrangement according to Claim 1, characterized in that the cover (10a, 20a, 30a, 40a) has a filter, in particular a filter fabric (2, 12, 22, 32), and the carrier fabric for receiving and fixing the organic germination layer has a claw layer (4, 14, 24, 34).

3. Arrangement according to Claim 1 or 2, characterized in that the cover (10a, 20a, 30a) has an armouring, particularly an armouring fabric (3, 13, 23, 33).

4. Arrangement according to Claim 2 or 3, characterized in that the armouring fabric (3, 13, 23, 33) is arranged between the claw layer (4, 14, 24, 34) and the filter fabric (2, 12, 22, 32), or the filter fabric is worked into the armouring fabric.

5. Arrangement according to one of Claims 1 to 4, characterized in that the carrier fabric has a ground fabric (6, 16, 26, 36) which is joined to the cover (10a, 20a, 30a) and which is to be laid on the surface of the ground and to be fixed to the anchorage (7, 17, 27, 37).

6. Arrangement according to Claims 3 and 5, characterized in that the ground fabric (6, 16, 26, 36) and the armouring fabric (3, 13, 23, 33) are formed by a continuous web of fabric.

7. Arrangement according to one of Claims 1 to 6, characterized in that the armouring fabric (3, 13, 23, 33) is made of metal.

8. Arrangement according to one of Claims 1 to 7, characterized in that the cover (10a, 20a, 30a, 40a) has a static netting (29) in an outer region.

9. Arrangement according to Claim 8, characterized in that the static netting (29) lies on the claw layer (24).

10. Arrangement according to one of Claims 1 to 9, characterized by adjustable spacer plates (7b), each of which is fixed to an anchor bar (7f) of the anchorage (7) and lies against the underside of the cover (10a), while on the anchor bar (7f) a likewise adjustable element (7c, 7d) is arranged which lies against the upper side of the cover (10a).

11. Arrangement according to Claim 10, characterized in that on the anchor bar (7f) a pressure distribution grid (7d) is provided which engages from outside into the cover (10a) and fixes the latter.

12. Arrangement according to one of Claims 1 to 11, characterized by intermediate anchors (8, 18, 28), each of which is fixed at one end to the cover (10a, 20a, 30a) and at the other end to the ground fabric (6, 16, 26).

13. Arrangement according to one of Claims 2 to 12, characterized in that the filter fabric (2, 12, 22, 32) and the armouring fabric (3, 13, 23, 33) in the filled state form a block, and in that the other layers of the carrier fabric cover a plurality of blocks (41) formed in this way.

14. Arrangement according to one of Claims 1 to 13, characterized by filler necks (39) in the cover (10a, 20a, 30a).

15. Arrangement according to Claim 13, characterized in that the armouring fabric (33) is arranged on the outside and the filter fabric (32) on the inside, embracing the block.

16. Arrangement according to one of Claims 13 to 15, characterized in that the blocks have a plurality of spacers (38).

17. Arrangement according to one of Claims 13 to 16, characterized in that the anchorage (37) is arranged between adjoining blocks (41).

18. Arrangement according to Claim 1, characterized in that means (8, 18, 28, 38) are provided which fix at least the cover (10a, 20a, 30a) to correspond to the prescribed thickness of the chamber.

19. Arrangement according to one of Claims 1 to 18, characterized by pressure plates (7e) which are arranged adjustably on each anchor bar (7f) and can be applied against the inner side of the ground fabric (6).

20. Method of forming a vegetation-supporting revetment by means of an arrangement according to Claim 1, comprising the following method steps:
a) Preparation of a formation,
b) Preparation of main anchorage points and fixing of the anchorages,
c) Laying of the carrier fabric and fixing of a part of the carrier fabric,
d) Fastening of the cover to the anchorages at a distance from the surface of the ground in order to form a mattress-shaped chamber,
e) Hydropneumatic introduction of the sprayed material into the mattress-shaped chamber formed by the carrier fabric, filling the crevices in the subgrade,
f) Hydraulic filling of the cover with a germination layer containing a plant seed mixture,
g) Planting-up of the steep slope.

21. Method according to Claim 20, characterized in that spacer plates (7b) are appropriately adjusted on the anchorages to fix the layer thickness and level out unevenness.

22. Method according to Claim 20, characterized in that the sprayed material is conveyed pneumatically by means of piping and interspersed with water immediately on passing out of the spray nozzle.

23. The use of the arrangement according to one of Claims 1 to 19 as protection against erosion in high water.

## Revendications

1. Dispositif pour créer un habillage, que l'on peut rendre verdoyant, sur un talus ou une partie rocheuse, comportant un élément d'une certaine étendue, que l'on peut fixer à la base sous-jacente à l'aide de systèmes d'ancrage (7,17,27,37) et derrière lequel on peut appliquer par voie hydropneumatique un remplissage au moyen d'un matériau pouvant être injecté (1,11,21,31), caractérisé en ce que l'élément d'une certaine étendue en surface forme, à l'état installé, une chambre formant matrice qui comporte un revêtement supérieur (10a,20a,30a,40a) imperméable vis-à-vis du matériau d'injection, une face inférieure ainsi que des parois latérales, et possède au moins une ouverture (39), par laquelle le matériau pouvant être injecté peut être introduit dans la chambre pour former une couche de végétation, et que le revêtement supérieur (10a,20a,30a, 40a) possède un treillis de support (10,20,30,40) pour une couche de germes organiques, treillis à travers lequel une croissance peut s'effectuer et qui, pour recevoir et fixer la couche de germes organiques, comporte un mélange de graines.

2. Dispositif selon la revendication 1, caractérisé en ce que le revêtement supérieur (10a,20a,30a, 40a) possède un filtre et notamment un treillis filtrant (2,12,22,32) et que le treillis de support servant à recevoir et fixer la couche de germes organiques possède une couche d'accrochage (4,14,24,34).

3. Dispositif selon la revendication 1 ou 2, caractérisé en ce que le revêtement supérieur (10a,20a,30a) possède une armature et notamment un treillis d'armature (3,13,23, 33).

4. Dispositif selon la revendication 2 ou 3, caractérisé en ce que le treillis d'armature (3,13,23,33) est disposé entre la couche d'accrochage (4,14,24,34) et le treillis filtrant (2,12,22,32), ou que le treillis filtrant est inséré dans le treillis d'armature.

5. Dispositif selon l'une des revendications 1 à 4, caractérisé en ce que le treillis de support possède un treillis de base (6,16,26,36), qui est relié au revêtement supérieur (10a, 20a,30a) et qui doit être placé sur la surface du sol et doit être fixé au système d'ancrage (7,17,27,37).

6. Dispositif selon les revendications 3 et 5, caractérisé en ce que le treillis de base (6,16,26,36) et le treillis d'armature (3,13,23,33) sont formés par une borne de treillis continue.

7. Dispositif selon l'une des revendications 1 à 6, caractérisé en ce que le treillis d'armature (3,13,23, 33) est formé d'un métal.

8. Dispositif selon l'une des revendications 1 à 7, caractérisé en ce que le revêtement supérieur (10a,20a,30a,40a) possède, dans une partie extérieure, un filet statique (29).

9. Dispositif selon la revendication 8, caractérisé en ce que le filet statique (29) repose sur une couche d'accrochage (24).

10. Dispositif selon l'une des revendications 1 à 9, caractérisé par des plaques d'entretoisement réglables (7d), qui sont fixées respectivement à la barre d'ancrage (7f) du système d'ancrage (7) et s'appliqueNT contre la face inférieure du revêtement supérieur (10a), un élément également réglable (7c,7d), qui s'applique sur la face supérieure du revêtement supérieur (10a), étant disposé sur la barre d'ancrage (7f).

11. Dispositif selon la revendication 10, caractérisé en ce que sur la barre d'ancrage (7f) est prévue une grille de répartition de pression (7d), qui s'engage de l'extérieur dans le revêtement supérieur (10a) et fixe ce dernier.

12. Dispositif selon l'une des revendications 1 à 11, caractérisé par des éléments d'ancrage intermédiaires (8,18,28), qui sont fixés respectivement par une extrémité au revêtement supérieur (10a,20a,30a) et, par leur autre extrémité, au treillis de base (6,16,26).

13. Dispositif selon l'une des revendications 2 à 12, caractérisé en ce que le treillis filtrant (2,12,22,32) et le treillis d'armature (3,13,23,33) forment, à l'état rempli, un bloc et que les autres couches du treillis de support recouvrent plusieurs blocs (41) agencés de cette manière.

14. Dispositif selon l'une des revendications 1 à 13, caractérisé par des tubulures de remplissage (39) situées dans le revêtement (10a,20a,30a).

15. Dispositif selon la revendication 13, caractérisé en ce que le treillis d'armature (33) est disposé à l'extérieur et que le treillis filtrant (32) est disposé à l'intérieur et entoure le bloc.

16. Dispositif selon l'une des revendications 13 à 15, caractérisé en ce que les blocs possèdent plusieurs entretoises (38).

17. Dispositif selon l'une des revendications 13 à 16, caractérisé en ce que le système d'ancrage (37) est disposé entre des blocs contigus (41).

18. Dispositif selon la revendication 1, caractérisé en ce que des moyens (8,18,28,38) sont prévus, et fixent au moins le revêtement supérieur (10a,20a,32a), en fonction de l'épaisseur prévue de la chambre.

19. Dispositif selon l'une des revendications 1 à 18, caractérisé par des plaques de compression (7a), qui sont disposées, de manière à être réglables, respectivement sur une barre d'ancrage (7f) et peuvent être appliquées sur la face intérieure du treillis de base (6).

20. Procédé pour créer un habillage, que l'on peut rendre verdoyant, sur un talus ou une partie rocheuse, à l'aide d'un dispositif selon la revendication 1, comprenant les étapes opératoires suivantes :
a) création d'une plate-forme,
b) création de points d'ancrage principaux et fixation des systèmes d'ancrage,
c) conception du treillis de support et fixation d'une partie du treillis de support
d) fixation du revêtement supérieur aux systèmes d'ancrage à distance de la surface du sol, pour former une chambre semblable à une matrice,
e) introduction hydropneumatique d'un matériau d'injection dans la chambre en forme de matrice, formée par le treillis de support, avec remplissage des rainures de la base sous-jacente,
f) remplissage hydraulique du revêtement supérieur avec une couche de germes contenant un mélange de graines de plantes,
g) mise en place de plantations dans le talus.

21. Procédé selon la revendication 20, caractérisé en ce qu'on règle de façon correspondante, sur les systèmes d'ancrage, des plaques d'entretoisement (7b) servant à fixer l'épaisseur de couche et égaliser de façon correspondante des inégalités.

22. Procédé selon la revendication 20, caractérisé en ce qu'on transporte pneumatiquement le matériau d'injection à l'aide d'un système de tuyaux et qu'on le mélange à de l'eau directement à sa sortie de la buse de projection.

23. Utilisation du dispositif selon l'une des revendications 1 à 19 en tant que système de protection contre l'érosion dans le cas d'une inondation.
